# EUROPÄISCHE PATENTSCHRIFT

(11) **EP 3 853 084 B1**
(45) Veröffentlichungstag und Bekanntmachung des Hinweises auf die Patenterteilung: **11.05.2022**
(21) Anmeldenummer: 19772686.2
(22) Anmeldetag: 17.09.2019
(51) Int. Cl.: B60T 1/087, B60T 10/02, F16D 23/02, F16D 57/04

(54) **HYDRODYNAMISCHER RETARDER MIT SYNCHRONISATION**
HYDRODYNAMIC RETARDER WITH SYNCHRONIZATION
RETARDATEUR HYDRODYNAMIQUE AVEC SYNCHRONISATION

(30) Priorität: 19.09.2018 DE 102018122944
(43) Veröffentlichungstag der Anmeldung: 28.07.2021
(73) Patentinhaber: Voith Patent GmbH, 89522 Heidenheim (DE)
(72) Erfinder: MÜLLER, Philipp, 74523 Schwäbisch Hall (DE); SCHREIBER, Alexander, 74564 Crailsheim (DE); MENNE, Achim, 74564 Crailsheim (DE)
(74) Vertreter: Voith Patent GmbH - Patentabteilung
(86) Internationale Anmeldenummer: PCT/EP2019/074806
(87) Internationale Veröffentlichungsnummer: WO 2020/058241

(56) Entgegenhaltungen:
- DE-A1- 3 409 691
- DE-A1-102013 224 095
- DE-A1-102016 218 078

## Beschreibung

Die Erfindung betrifft eine hydrodynamische Maschine, insbesondere einen hydrodynamischen Retarder, zur Erzeugung eines Bremsmomentes mittels eines Arbeitsfluides, wobei der Retarder eine Synchronisationsvorrichtung umfasst, mittels der der Rotor des Retarders mit einer Antriebsvorrichtung eines Antriebsmotors koppelbar ist. Der Retarder ist zum Anbau an ein Getriebe vorgesehen.

Insbesondere betrifft die Erfindung hydrodynamische Retarder, die als verschleissfreie Dauerbremse in Antriebsstränge, insbesondere Kraftfahrzeugantriebsstränge, beispielsweise in Lastkraftwagen und Bussen, eingesetzt werden.

Ein derartiger Retarder umfasst einen Rotor und einen Stator, die miteinander einen torusförmigen Arbeitsraum ausbilden. Der Arbeitsraum ist für einen ersten Betriebszustand, Bremsen, über wenigstens einen vorgesehenen Arbeitsmediumeinlass mit Arbeitsmedium befüllbar. Während der Bremsung bildet sich im Arbeitsraum eine Kreislaufströmung, wobei das Arbeitsmedium ein Drehmoment hydrodynamisch vom Rotor auf den Stator überträgt. Für einen zweiten Betriebszustand, Nicht-Bremsbetrieb, wird das Arbeitsmedium aus dem Arbeitsraum des Retarders abgepumpt, um eine Drehmoment- und/oder Antriebsleistungsübertragung zu vermeiden.

Als Arbeitsmedium für einen Retarder kann ein Öl aus einem Ölkreislauf oder Kühlwasser aus einem Kühlwasserkreislauf verwendet werden. Beide Technologien sind aus dem StdT hinreichend bekannt.

Aus der DE 10 2013 224 095 A1 ist beispielsweise ein Wasserretarder mit einer Synchronisationsvorrichtung, die im Retardergehäuse angeordnet ist bekannt.

Ein etwas anderer Aufbau ist aus der DE10 2016 218 078 bekannt, auch hier wird vorgeschlagen, dass zur Drehmomentübertragung zwischen Hochtriebszahnrad und Rotor, eine Koppelvorrichtung vorgesehen ist, die im Gehäuse der hydrodynamischen Maschine angeordnet ist. Zur Betätigung wird eine Betätigungsvorrichtung vorgeschlagen, die Axial entlang der Rotorachse des Retarders verschiebbar ist und eine zweiseitige Lagerung aufweist.

Beide Lösungen offenbaren einen Aufbau, bei dem die Schiebemuffe mittels einer Schiebeeinrichtung über einen pneumatischen Zylinder betätigt wird, wobei der Zylinder einmal im Rotorgehäuse oder im Lagergehäuse integriert ist.

Beide Versionen haben den Nachteil, dass die lineare eingeleitete Kraft von der Betätigungseinrichtung nicht ohne Zwang auf die Schiebemuffe der Synchronisation übertragen wird. Es hat sich gezeigt, dass dies zu Synchronisationsproblemen führen kann.

Die Aufgabe der Erfindung ist es, einen alternativen Aufbau für eine Betätigungsvorrichtung vorzuschlagen, mittels der die Betriebssicherheit einer Synchronisation in einem Retarder zu verbessern und weiterhin die Wartungsfreundlichkeit zu verbessern.

Die Aufgabe wird erfindungsgemäß durch eine Ausführung entsprechend Anspruch 1 gelöst. Weitere vorteilhafte Merkmale der erfindungsgemäßen Ausführung finden sich in den Unteransprüchen.

Es wird ein Retarder zum Anbau an einen Antriebsstrang vorgeschlagen, der ein mehrteiliges Retardergehäuse mit einem Retardergehäuseteil und eine Schalteinrichtung für eine Synchronisationseinrichtung umfasst. Die Synchronisationseinrichtung ist im Retardergehäuse positioniert und umfasst eine Schiebemuffe, mittels der die Synchronisationsvorrichtung geschaltet werden kann, Erfindungsgemäß wird vorgeschlagen, dass die Schalteinrichtung eine Betätigungseinrichtung und eine Hebelvorrichtung aufweist, wobei die Betätigungseinrichtung außerhalb des Retardergehäuseteils und die Hebelvorrichtung im Wesentlichen innerhalb des Retardergehäuses angeordnet sind.

Die Hebelvorrichtung kann eine Schaltgabel mit einem Hebel umfassen und das Retardergehäuseteil kann einen Durchgang oder eine Öffnung aufweisen, durch den der Hebel der Schaltgabel hindurchragt. Dieser Aufbau ermöglicht eine einfache Montage der Betätigungseinrichtung von außen. Weiterhin kann die Lage der Betätigungseinrichtung leicht an die Bauraumverhältnisse im Antriebsstrang eines Kraftfahrzeuges angepasst werden.

Weiterhin kann die Schaltgabel schwenkbar um eine Drehachse im Retardergehäuseteil gelagert sein und einen Hebelkopf aufweisen, der mit der Betätigungseinrichtung koppelbar ist.

An der Schaltgabel können beispielsweise zwei Gleitschuhe drehbar gelagert angeordnet sein und die Synchronisationseinrichtung kann eine Schiebemuffe mit einer Ringnut umfassen, die in Axialrichtung des Retarders verschiebbar ist. Vorzugsweise greifen die beiden Gleitschuhe an der Schaltgabel der Hebelvorrichtung im Wesentlichen auf Höhe der Retarderlängsachse in die Ringnut ein, so dass die Schiebemuffe möglichst zwangsfrei entlang der Retarderachse verschoben wird.

Die Betätigungseinrichtung kann ein beliebiger Mechanismus sein, der beispielsweise eine Schubstange umfassen, in die der Hebelkopf eingreift. Dabei wird die Schubstange der Betätigungseinrichtung bevorzugt mittels hydraulischer, pneumatischer oder elektrischer Mittel bewegt.

Anhand von Ausführungsbeispielen werden weitere vorteilhafte Ausprägungen der Erfindung unter Bezugnahme auf die Zeichnungen erläutert. Die genannten Merkmale können nicht nur in der dargestellten Kombination vorteilhaft umgesetzt werden, sondern auch einzeln untereinander kombiniert werden. Die Figuren zeigen im Einzelnen:
- Fig. 1: Rotorgehäuse mit Betätigungseinrichtung ohne die Synchronisation
- Fig. 2: die Schaltgabel
- Fig. 3: Eingriff der Schaltgabel in die Betätigungseinrichtung
- Fig. 4: Eingriff in die Schiebemuffe

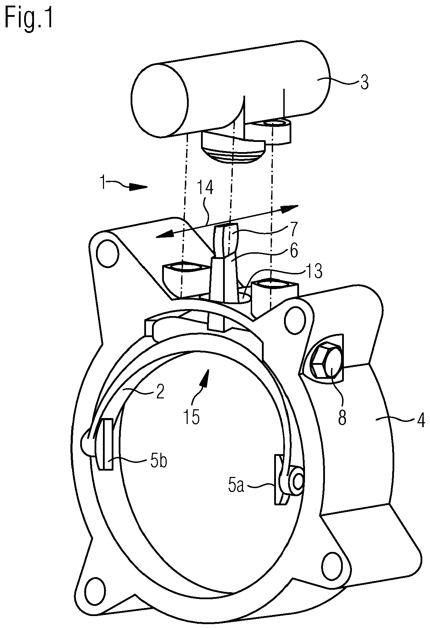

Figur 1 zeigt nicht den gesamten Retarder, sondern nur ein Retardergehäuseteil 4, hier das Rotorgehäuse, mit der Betätigungseinrichtung 3 ohne die weiteren Bauteile der Synchronisation. Alternativ kann das Retardergehäuseteil 4 aber auch ein zusätzliches Gehäuseteil sei, das scheibenförmig ausgeführt ist und zwischen Lagergehäuse und Rotorgehäuse positioniert ist. Auf die Darstellung des gesamten Gehäuses des Retarder wie auch der weiteren Bauteile innerhalb des Retardergehäuses wurde verzichtet, da dies auch aus dem oben angeführten StdT hinreichend entnommen werden können.

Der dargestellte Teil des gesamten Retardergehäuses ist das Rotorgehäuseteil 4, das zwischen einem Lagergehäuseteil und einem Statorgehäuseteil angeordnet ist. Die drei Gehäuseteile bilden einen Raum, in dem unter anderem die Synchronisation untergebracht ist.

Die Darstellung in Figur 1 zeigt nur die Schaltvorrichtung 1 mit der Hebelvorrichtung 15 im Retardergehäuseteil 4 und die demontierter Betätigungsvorrichtung 3. Die Hebelvorrichtung 15 umfasst eine Schaltgabel 2 mit einem Hebel 6. Im Retardergehäuseteil 4 ist ein Durchgang 13 vorgesehen, durch den der Hebel 6 der Schaltgabel 2 hindurchragt.

Die Schaltgabel 2 ist schwenkbar um die Drehachse 8 im Retardergehäuseteil 4 gelagert und am Hebel 6 ist ein Hebelkopf 7 vorgesehen, der mit der Betätigungseinrichtung koppelbar ist. Die Schaltgabel 2 kann so von außerhalb des Retardergehäuses betätigt bzw. geschwenkt werden.

An der Schaltgabel 2 sind zwei Gleitschuhe 5a, b drehbar gelagert angeordnet. Die Bewegungsachsen 17 der Gleitschuhe 5a, b fluchten zueinander. Beim Schwenken der Schaltgabel, wie auch während des Bremsbetriebs des Retarders, gleiten die Gleitschuhe 5a, b in der Ringnut 11 der Schiebemuffe 10, wobei bei der Verschiebung der Schiebemuffe 10 in Axialrichtung des Retarders die Gleitschuhe 5a, b ihre Position durch die Schwenkbewegung minimal in Bezug auf die Retarderlängsache 18 verändern. Im Idealfall ist diese relative Positionsänderung minimal.

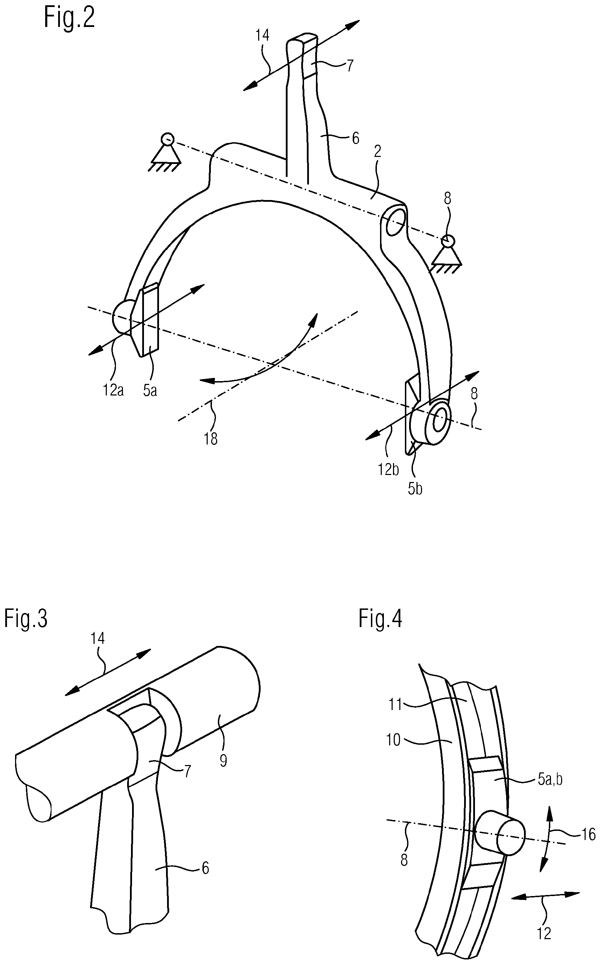

Die Figuren 2 bis 4 zeigen Details der Hebelvorrichtung 15. In Figur 2 ist die Schaltgabel 2 dargestellt. Zur Verdeutlichung sind die Achsen mit dargestellt. Figur 3 zeigt den Eingriff des Hebelkopfes 7 in die Schubstange 9. Nicht dargestellt sind die Mittel mit der die Schubstange 9 in Betätigungsrichtung 14 bewegt wird. Die Mittel können hydraulisch, pneumatisch oder elektrisch angesteuerte Mittel sein wie beispielsweise ein Pneumatikzylinder oder ein Elektromotor.

Figur 4 zeigt noch einmal die Bewegung in der Ringnut 11 der Schiebemuffe 10. Beim Einschalten des Retarders also dem Übergang vom Nicht-Bremsbetrieb in den Bremsbetrieb wird die Synchronisation gestartet, indem die Schiebemuffe mittels der betätigten Schaltgabel 2 geschlossen wird. Die Schiebemuffe wird in Rotation versetzt, so dass der Gleitschuh in der Ringnut 11 gleitet. Die Schiebemuffe 10 dreht im Bremsbetrieb mit Rotordrehzahl bzw. Antriebsdrehzahl. Um ein Verkanten der Schiebemuffe 11 bzw. der Synchronisation zu vermeiden, ist es wichtig, dass die Gleitschuhe auf Höhe der Retarderlängsachse 18 angeordnet sind. Die relative Bewegung aufgrund der Schwenkbewegung senkrecht zur Schiebeachse 12 sollte möglichst klein sein. Mit anderen Worten am kritischen Schaltpunkt sollten die Schiebeachsen 12a, b mit der Retarderlängsachse 18 möglichst in einer Ebene liegen.

### Bezugszeichenliste

- 1: Schaltvorrichtung
- 2: Schaltgabel
- 3: Betätigungsvorrichtung
- 4: Retardergehäuseteil
- 5a, b: Gleitschuh
- 6: Hebel
- 7: Hebelkopf
- 8: Drehachse
- 9: Schubstange
- 10: Schiebemuffe
- 11: Ringnut
- 12: Schieberichtung
- 13: Durchgang
- 14: Betätigungsrichtung
- 15: Hebeleinrichtung
- 16: Bewegungsrichtung
- 17: Bewegungsachse Gleitschuh
- 18: Retarderlängsachse

## Patentansprüche

1. Retarder zum Anbau an einen Antriebsstrang, umfassend ein mehrteiliges Retardergehäuse mit einem Retardergehäuseteil (4) und eine Schalteinrichtung (1) für eine Synchronisationseinrichtung, die im Retardergehäuse positionert ist und eine Schiebemuffe (10) umfasst, mittels der die Synchronisationseinrichtung geschaltet werden kann,
**dadurch gekennzeichnet,**
**dass** die Schalteinrichtung (1) eine Betätigungseinrichtung (3) und eine Hebelvorrichtung (15) aufweist, wobei die Betätigungseinrichtung (3) außerhalb des Retardergehäuseteils (4) und die Hebelvorrichtung (15) im Wesentlichen innerhalb des Retardergehäuses angeordnet sind.

2. Retarder nach Anspruch 1,
**dadurch gekennzeichnet,**
**dass** die Hebelvorrichtung (15) eine Schaltgabel (2) mit einem Hebel (6) umfasst und das Retardergehäuseteil (4) einen Durchgang (13) aufweist, durch den der Hebel (6) der Schaltgabel (2) hindurchragt.

3. Retarder nach Anspruch 2,
**dadurch gekennzeichnet,**
**dass** die Schaltgabel (2) schwenkbar um eine Drehachse (8) im Retardergehäuseteil (4) gelagert ist und einen Hebelkopf (7) aufweist, der mit der Betätigungseinrichtung koppelbar ist.

4. Retarder nach Anspruch 2,
**dadurch gekennzeichnet,**
**dass** an der Schaltgabel (2) zwei Gleitschuhe (5a, b) drehbar gelagert angeordnet sind.

5. Retarder nach Anspruch 1,
**dadurch gekennzeichnet,**
**dass** die Synchronisationseinrichtung eine Schiebemuffe (10) mit einer Ringnut (11) umfasst, die in Axialrichtung des Retarders verschiebbar ist.

6. Retarder nach Anspruch 4 und 5,
**dadurch gekennzeichnet,**
**dass** die beiden Gleitschuhe (5a, b) an der Schaltgabel (2) der Hebelvorrichtung (15) im Wesentlichen im auf Höhe der Retarderlängsachse (18) in die Ringnut (11) eingreifen.

7. Retarder nach Anspruch 1,
**dadurch gekennzeichnet,**
**dass** die Betätigungseinrichtung (3) eine Schubstange (9) umfasst, in die der Hebelkopf (7) eingreift.

8. Retarder nach Anspruch 7,
**dadurch gekennzeichnet,**
**dass** die Schubstange (9) der Betätigungseinrichtung (3) mittels hydraulische, pneumatische oder elektrische Mittel bewegbar ist.

## Claims

1. Retarder for fitting to a drivetrain, comprising a multiple-part retarder housing having a retarder housing part (4) and a shifting installation (1) for a synchronization installation, said shifting installation being positioned in the retarder housing and comprising a shifting collar (10) by means of which the synchronization installation can be shifted,
**characterized in that**
the shifting installation (1) has an activation installation (3) and a lever device (15), wherein the activation installation (3) is disposed outside the retarder housing part (4) and the lever device (15) is disposed so as to be substantially within the retarder housing.

2. Retarder according to Claim 1,
**characterized in that**
the lever device (15) comprises a shifting fork (2) having a lever (6), and the retarder housing part (4) has a passage (13) through which the lever (6) of the shifting fork (2) protrudes.

3. Retarder according to Claim 2,
**characterized in that**
the shifting fork (2) is mounted in the retarder housing part (4) so as to be pivotable about a rotation axis (8) and has a lever head (7) which is able to be coupled to the activation installation.

4. Retarder according to Claim 2,
**characterized in that**
two sliding blocks (5a, b) are disposed so as to be rotatably mounted on the shifting fork (2).

5. Retarder according to Claim 1,
**characterized in that**
the synchronization installation comprises a shifting collar (10) having an annular groove (11), said shifting collar (10) being displaceable in the axial direction of the retarder.

6. Retarder according to Claims 4 and 5,
**characterized in that**
the two sliding blocks (5a, b) on the shifting fork (2) of the lever device (15) engage in the annular groove (11) substantially at the height level of the retarder longitudinal axis (18).

7. Retarder according to Claim 1,
**characterized in that**
the activation installation (3) comprises a push rod (9) in which the lever head (7) engages.

8. Retarder according to Claim 7,
**characterized in that**
the push rod (9) of the activation installation (3) is movable by means of hydraulic, pneumatic or electric means.

## Revendications

1. Retardateur pour le montage sur une chaîne cinématique, comprenant un carter de retardateur en plusieurs parties avec une partie de carter de retardateur (4) et un dispositif de commutation (1) pour un dispositif de synchronisation, qui est positionné dans le carter de retardateur et comprend un manchon coulissant (10), au moyen duquel le dispositif de synchronisation peut être commuté,
**caractérisé en ce que**
le dispositif de commutation (1) présente un dispositif d'actionnement (3) et un appareil à levier (15), le dispositif d'actionnement (3) étant agencé à l'extérieur de la partie de carter de retardateur (4) et l'appareil à levier (15) étant agencé essentiellement à l'intérieur du carter de retardateur.

2. Retardateur selon la revendication 1,
**caractérisé en ce que**
l'appareil à levier (15) comprend une fourche de commutation (2) avec un levier (6) et la partie de carter de retardateur (4) présente un passage (13) à travers lequel le levier (6) de la fourche de commutation (2) fait saillie.

3. Retardateur selon la revendication 2,
**caractérisé en ce que**
la fourche de commutation (2) est montée pivotante autour d'un axe de rotation (8) dans la partie de carter de retardateur (4) et présente une tête de levier (7) qui peut être couplée au dispositif d'actionnement.

4. Retardateur selon la revendication 2,
**caractérisé en ce que**
deux patins glissants (5a, b) sont montés rotatifs sur la fourche de commutation (2).

5. Retardateur selon la revendication 1,
**caractérisé en ce que**
le dispositif de synchronisation comprend un manchon coulissant (10) avec une rainure annulaire (11), qui peut être amené à coulisser dans la direction axiale du retardateur.

6. Retardateur selon les revendications 4 et 5,
**caractérisé en ce que**
les deux patins glissants (5a, b) sur la fourche de commutation (2) de l'appareil à levier (15) pénètrent dans la rainure annulaire (11) essentiellement à la hauteur de l'axe longitudinal de retardateur (18).

7. Retardateur selon la revendication 1,
**caractérisé en ce que**
le dispositif d'actionnement (3) comprend une bielle de poussée (9) dans laquelle pénètre la tête de levier (7) .

8. Retardateur selon la revendication 7,
**caractérisé en ce que**
la bielle de poussée (9) du dispositif d'actionnement (3) peut être déplacée par des moyens hydrauliques, pneumatiques ou électriques.
